(19) Europäisches Patentamt
European Patent Office
Office européen des brevets

(11) Numéro de publication: **0 199 616**
**B1**

(12) # FASCICULE DE BREVET EUROPEEN

(45) Date de publication du fascicule du brevet: **31.05.89**

(51) Int. Cl.⁴: **F41C 21/00**, H01G 7/02

(21) Numéro de dépôt: **86400580.6**

(22) Date de dépôt: **19.03.86**

(54) **Dispositif de contrôle de l'amorçage d'un artifice pyrotechnique.**

(30) Priorité: **25.03.85 FR 8504402**

(43) Date de publication de la demande: **29.10.86 Bulletin 86/44**

(45) Mention de la délivrance du brevet: **31.05.89 Bulletin 89/22**

(84) Etats contractants désignés: **DE GB IT SE**

(56) Documents cités:
**EP-A- 0 050 332**
**BE-A- 444 734**
**US-A- 3 912 830**
**US-A- 3 973 195**
**US-E- 28 328**

**THIN SOLID FILMS, vol. 48, 1978, Elsevier Sequoia S.A., pages 175,176, Lausanne, CH; V.K. JAIN et al**

(73) Titulaire: **COMMISSARIAT A L'ENERGIE ATOMIQUE, 31/33, rue de la Fédération, F-75015 Paris(FR)**

(72) Inventeur: **Bouchu, Michel, 8, Chemin du Parc, F-95230 Soisy Sous Montmorency(FR)**

(74) Mandataire: **Mongrédien, André et al, c/o BREVATOME 25, rue de Ponthieu, F-75008 Paris(FR)**

**EP 0 199 616 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention permet de contrôler le bon fonctionnement de l'amorçage d'un artifice pyrotechnique.

Pour faire exploser un artifice pyrotechnique tel qu'une charge explosive, il est nécessaire de l'amorcer, c'est-à-dire de l'amener à des conditions de température et de pression suffisamment élevées pour que la réaction puisse démarrer. Ceci est obtenu par un détonateur qui comporte un système d'ignition par exemple électrique, et une ou plusieurs charges explosives plus instables que la charge explosive principale que l'on désire amorcer. Cette charge ou ces charges du détonateur génèrent des ondes de choc qui amorcent la charge principale.

Cependant, il n'existe actuellement aucun dispositif permettant de contrôler le bon fonctionnement d'une chaîne d'amorçage d'une charge d'explosif, cette chaîne étant constituée par un moyen pour fournir une impulsion haute tension, par un système d'ignition, et par une ou plusieurs charges explosives disposées en cascade.

Par suite, dans le cas où l'on réalise a posteriori que l'explosif a fonctionné de manière anormale, ou n'est plus en mesure de déterminer à quel facteur (impulsion électrique, chaîne d'amorçage ou explosif lui-même) imputer ce fonctionnement défectueux.

L'invention a pour objet un dispositif de contrôle de l'amorçage d'un artifice pyrotechnique qui permet d'en contrôler le fonctionnement sans le perturber.

Plus précisément, l'invention concerne un dispositif de contrôle de l'amorçage d'un artifice pyrotechnique comprenant un détonateur constitué d'au moins une charge et d'un système d'ignition de ladite charge, des moyens pour fournir une impulsion électrique à haute tension au détonateur, des moyens pour positionner le détonateur par rapport à une charge explosive et l'appliquer sur cette charge, caractérisé en ce qu'une sonde piézoélectrique est disposée à l'arrière du détonateur et appliquée contre celui-ci, cette sonde étant constituée d'un film présentant deux faces, d'un polymère bi-orienté comportant une zone polarisée, d'une électrode reliée à chaque face de la zone polarisée, et de moyens de connexion pour relier chaque électrode à un dispositif de mesure.

De préférence, le polymère bi-étiré est le polyfluorure de vinylidène (PVDF ou $PVF_2$).

De préférence encore, la sonde piézoélectrique comporte en outre une couche isolante sur chacune des faces du film. Cette couche est réalisée par exemple en PVDF non polarisé.

D'autres caractéristiques et avantages de l'invention apparaîtront encore à la lecture de la description qui suit d'un exemple de réalisation donné à titre illustratif, en référence aux figures annexées.

La figure 1 est une vue en plan d'une sonde de diagnostic utilisée dans un dispositif conforme à l'invention.

La figure 2 est une vue en coupe de la sonde représentée sur la figure 1.

La figure 3 illustre un exemple de réalisation d'un dispositif de diagnostic conforme à l'invention.

La figure 4 est une courbe qui donne le signal électrique délivré par la sonde de diagnostic en fonction du temps.

La figure 5 est une courbe obtenue par intégration de la tension délivrée par la sonde.

La figure 6 représente un deuxième mode de réalisation d'une sonde de diagnostic utilisée dans un dispositif conforme à l'invention.

La figure 7 représente un dispositif de diagnostic conforme à l'invention utilisant la sonde de la figure 6.

La figure 8 est une vue selon la ligne VIII-VIII de la figure 7.

La sonde de diagnostic représentée sur les figures 1 et 2 comprend un film 2 de polymère bi-étiré PVDF (polyfluorure de vinylidène). Son épaisseur est de 23 microns, mais des épaisseurs différentes peuvent être utilisées. Comme on peut le voir sur la figure 1, le film comporte une zone 2a découpée selon une forme sensiblement circulaire prolongée par une languette 2b. Une électrode 4 est formée sur une surface du film 2, et une électrode 6 sur l'autre face du film 2. Les électrodes 4 et 6 sont déposées par pulvérisation cathodique. Elles sont en un métal tel que le cuivre ou l'aliminium. Leur épaisseur est de l'ordre du micron. Chaque électrode, vue en plan (voir figure 1), se compose d'une zone circulaire 4a, 6a et d'une languette 4b, 6b reliée à cette zone circulaire. Les zones circulaires 4a, 6a des électrodes 4 et 6 sont situées en regard l'une de l'autre, mais le diamètre de l'une des électrodes, par exemple 6, est plus petit que celui de l'autre.

Au centre de la partie 2a du film, on trouve une zone active 2c obtenue par une polarisation du polyfluorure de vinylidène bi-étiré.

La sonde comporte des moyens qui permettent de relier chacune des faces de la zone polarisée 2c à un dispositif de mesure de la tension délivrée par cette zone aux bornes d'une charge résistive 34. Dans l'exemple de réalisation décrit, ces moyens sont constitués par les électrodes 4a et 6a.

La zone polarisée peut être obtenue par tout procédé convenable, et notamment par le procédé décrit dans le brevet FR-A-2538157 qui concerne un procédé et un dispositif pour polariser des matériaux ferroélectriques. Selon ce procédé, on applique une haute tension sinusoïdale à très basse fréquence entre les deux électrodes 4 et 6. La zone polarisée se forme entre ces deux électrodes. On obtient ainsi une polarisation rémanente du polymère. La géométrie de la partie 2a de la sonde est déterminée par la forme des électrodes 4a et 6a.

Dans le cas où la sonde est utilisée dans un milieu conducteur de l'électricité, il est nécessaire de l'isoler. Elle comporte alors deux films de polymère, par exemple de polyfluorure de vinylidène (PVDF) non polarisé sur chacune de ses deux faces. On obtient ainsi une isolation des électrodes. Cette opération est faite à froid, sous pression, avec une graisse comme adjuvant. Dans l'exemple de réalisation représenté, l'épaisseur des films 8 est de 9 microns. On peut également utiliser des matériaux adhésifs qui ne présentent pas d'ionisation sous choc.

On a représenté sur la figure 3 un exemple d'utilisation d'une sonde de diagnostic d'amorçage d'une charge explosive conforme à l'invention. Une charge explosive 10 est amorcée par un détonateur 12. Ce détonateur se compose d'un boîtier 14 qui renferme trois charges explosives référencées respectivement 16, 18 et 20. La charge explosive 16 est amorcée par un système d'ignition 22. Le boîtier 14 comporte une sortie 24 pour un câble électrique destiné à fournir une impulsion à haute tension au système d'ignition 22, comme schématisé par la flèche 26. Lorsqu'une telle impulsion est délivrée, le système d'ignition 22 amorce la charge 16 qui amorce à son tour la charge 18 et finalement la charge 20. Cette dernière amorce l'explosif 10.

Le détonateur est contenu dans un boîtier 28 fermé par un couvercle 30. Un ressort 32, disposé entre le couvercle et le détonateur, a pour fonction de plaquer ce dernier contre la charge explosive afin d'assurer une bonne transmission de l'onde de choc produite par le détonateur. On souhaite pouvoir contrôler le fonctionnement du détonateur 12 afin de vérifier que la chaîne d'amorçage de l'explosif a fonctionné correctement.

A cet effet, une sonde 1 conforme à l'invention est introduite entre le ressort 32 et le boîtier de détonateur. Une pastille 33 métallique est intercalée entre le ressort et la sonde. La sonde 1 est reliée à une résistance de charge 34 par l'intermédiaire d'un connecteur 36. La résistance 34 est par exemple d'une valeur de 50Ω. Elle est reliée à un oscilloscope numérique ou à un analyseur de transitoires 38. Sous l'effet de la contrainte engendrée par l'onde de choc produite par chacune des parties constituantes du détonateur, puis par la charge explosive 10, la polarisation rémanente du polymère bi-étiré qui constitue le film 2 varie :

$P_3(t) = \Sigma j\, d_{3j}\, \sigma(t)$

où $P_3(t)$ est la variation de la polarisation rémanente du film 2 ;

$d_{3j}$ sont les composantes du tenseur piézoélectrique ;

$\sigma(t)$ est la contrainte appliquée.

Cette variation de la polarisation rémanente libère une quantité de charges électriques :

$Q(t) = SP_3(t)$

dans laquelle S représente la surface active du polymère. Ces charges sont récupérées dans la résistance 34. La tension obtenue aux bornes de cette résistance est donnée par la formule :

$$V(t) = R\frac{dQ(t)}{dt}$$

soit :

$$V(t) = K\frac{d\sigma(t)}{dt}$$

On obtient ainsi la chronométrie des phénomènes qui interviennent dans le dispositif d'amorçage. L'intégration du signal de tension donne :

$$Q(t) = \frac{1}{R}\int V_{(t)}\,dt = K'\sigma(t)$$

La courbe ainsi obtenue est représentative du profil de pression de l'onde de choc.

La figure 4 montre l'enregistrement du signal délivré par la sonde 1 et la figure 5 la courbe intégrale de ce signal. Sur ces courbes, on a repéré les différents stades de fonctionnement du détonateur 12. La courbe de la figure 4 est représentative de l'évolution du profil de pression de l'onde de choc au cours du temps, exprimée en microsecondes.

En A, on enregistre le choc créé par le système d'ignition 22 et le début de réaction de l'explosif 16, puis de A à B, le fonctionnement de l'explosif 16, de B à C celui de l'explosif 18, de C à D celui de l'explosif 20 et d'une détente de gaz due à la mise en vitesse de la partie du détonateur située à proximité du ressort 32. De D à E, on enregistre une augmentation de pression due à l'amorçage de l'explosif 10. A partir du point E, la pression diminue par suite du refroidissement et de l'expansion des gaz produits par l'explosion de l'explosif 10.

D'autres formes de sonde du diagnostic sont possibles. On a représenté sur la figure 6 une deuxième forme de sonde possible. Elle est constituée d'une simple languette de film 2, sur chacune des faces de laquelle on a déposé une bande formant électrode d'un métal conducteur, tel que le cuivre ou l'aluminium. Seule l'une de ces bandes, la bande 4, est visible sur la figure 6. Une zone polarisée est formée dans le film dans la zone où les deux électrodes sont en regard.

Sur la figure 7, on a représenté un détonateur 12 qui comporte un système d'ignition, et une ou plusieurs charges explosives (non représentées). Un câble électrique 40 transmet au détonateur une impulsion à haute tension. Deux broches 42 pénètrent dans des prises 44 du détonateur. Un pied de centrage 46, coopérant avec une rainure 48 du détonateur, assure un centrage correct du câble 40, ce qui facilite l'introduction des broches 42.

Comme on peut le voir sur la figure 8, qui représente une vue de dessus du détonateur, la sonde de diagnostic de la figure 6 est disposée au fond de la fente. Les électrodes de cette sonde sont reliées à un dispositif de mesure de la tension délivrée.

Le dispositif de contrôle qui vient d'être décrit présente plusieurs avantages.

Il constitue une sonde active. Son fonctionnement n'est lié à aucune alimentation extérieure. Cette propriété lui confère une très grande immunité aux parasites électriques, en particulier vis-à-vis de ceux qui sont liés à l'impulsion de haute tension qui est nécessaire au fonctionnement du dispositif d'ignition 22.

Etant donné que la sonde est réalisée en un matériau souple de faible épaisseur, elle présente une grande souplesse mécanique. En raison de cette souplesse et de cette faible épaisseur, elle peut être insérée dans des dispositifs complexes sans perturber leur fonctionnement.

La géométrie de la sonde peut être aisément modifée pour s'adapter à un dispositif d'amorçage particulier sans nécessiter de modification de son principe de fonctionnement.

Enfin, par son comportement analogique, le dispositif permet de diagnostiquer non seulement le fonctionnement global du dernier élément de la chaîne d'amorçage de l'explosif, mais aussi le fonctionnement de chacun des constituants de ce dernier élément.

## Revendications

1. Dispositif de contrôle de l'amorçage d'un artifice pyrotechnique comprenant un détonateur (12) constitué d'au moins une charge (16, 18, 20) et d'un système d'ignition (22) de ladite charge (16, 18, 20), des moyens (24, 26) pour fournir une impulsion électrique à haute tension au détonateur (12), des moyens pour positionner le détonateur par rapport à une charge explosive (10) et l'appliquer sur cette charge, caractérisé en ce qu'une sonde piézoélectrique (1) est disposée à l'arrière du détonateur et appliquée contre celui-ci, cette sonde étant constituée d'un film (2), présentant deux faces, d'un polymère bi-orienté comportant une zone polarisée (2c), d'une électrode (4, 6) reliée à chaque face de la zone polarisée, et de moyens de connexion (4b, 6b) pour relier chaque électrode (4a, 6a) à un dispositif de mesure (34, 38).

2. Dispositif selon la revendication 1, caractérisé en ce que le polymère bi-orienté est le polyfluorure de vinylidène.

3. Dispositif selon l'une quelconque des revendications 1 et 2, caractérisé en ce que les électrodes (4,6) sont en cuivre ou en aluminium.

4. Dispositif selon l'une quelconque des revendications 1 à 3, caractérisé en ce qu'il comporte en outre une couche isolante (8) déposée sur chacune desdites faces du film (2).

5. Dispositif selon la revendication 4, caractérisé en ce que la couche isolante (8) est en polyfluorure de vinylidène non polarisé.

6. Dispositif selon l'une quelconque des revendications 1 à 5, caractérisé en ce que les moyens pour positionner le détonateur (12) par rapport à la charge explosive (10), et pour l'appliquer sur cette charge sont constitués par un boîtier (28) entourant le détonateur et fermé par un couvercle (30), un ressort (32) étant disposé entre le couvercle (30) et le détonateur (12), une pastille (33) étant intercalée entre le détonateur (12) et le ressort (32).

## Patentansprüche

1. Vorrichtung zum Überprüfen der Zündung einer pyrotechnischen Ladung, enthaltend einen Detonator (12), der von wenigstens einer Ladung (16, 18, 20) und von einem Zündsystem (22) für die genannte Ladung (16, 18, 20) gebildet ist, Einrichtungen (24, 26) zum Abgeben eines elektrischen Impulses hoher Spannung an den Detonator (12), Einrichtungen, um den Detonator gegenüber einer Explosivladung (10) anzuordnen und ihn an dieser Ladung anzubringen, dadurch gekennzeichnet, daß ein piezoelektrischer Fühler (1) hinter dem Detonator angeordnet ist und an diesem anliegt, daß dieser Fühler besteht aus einem Film (2), der zwei Seiten aufweist, einem bi-orientierten Polymer, das eine polarisierte Zone (2c) aufweist, einer Elektrode (4, 6), die mit jeder Seite der polarisierten Zone verbunden ist, und aus Verbindungseinrichtungen (4b, 6b), um jede Elektrode (4a, 6a) mit einer Meßvorrichtung (34, 38) zu verbinden.

2. Vorrichtung nach Anspruch 1, dadurch gekennzeichnet, daß das bi-orientierte Polymer Vinylidenpolyfluorid ist.

3. Vorrichtung nach einem der Ansprüche 1 und 2, dadurch gekennzeichnet, daß die Elektroden (4, 6) aus Kupfer oder Aluminium bestehen.

4. Vorrichtung nach einem der Ansprüche 1 bis 3, dadurch gekennzeichnet, daß sie weiterhin eine Isolierschicht (8) aufweist, die auf jeder der genannten Filmseiten (2) aufgebracht ist.

5. Vorrichtung nach Anspruch 4, dadurch gekennzeichnet, daß die Isolierschicht (8) aus nicht polarisiertem Venylidenpolyfluorid besteht.

6. Vorrichtung nach einem der Ansprüche 1 bis 5, dadurch gekennzeichnet, daß die Einrichtungen zum Positionieren des Detonators (12) gegenüber der Explosivladung (10) und zum Anbringen über der Ladung von einem Behälter (28) gebildet sind, der den Detonator umgibt und der von einem Deckel (30) verschlossen ist, wobei eine Feder (32) zwischen dem Deckel (30) und dem Detonator (12) angeordnet ist, wobei eine Zündpille (33) zwischen dem Detonator (12) und der Feder (32) angeordnet ist.

## Claims

1. Device for controlling the priming of a pyrotechnic device incorporating a detonator (12) constituted by at least one charge (16, 18, 20) and a system (22) for igniting said charge (16, 18, 20), means (24, 26) for supplying a high voltage electric pulse to the detonator (12), means for positioning the detonator with respect to an explosive charge (10) and applying same to said charge, characterized in that a piezoelectric probe (1) is positioned to the rear of the detonator and is applied against the same, said probe being constituted by a film (2) having two faces of a biaxially stretched polymer having a polarized zone (2c), an electrode (4, 6) connected to each face of the polarized zone and connection means (4b, 6b) for connecting each electrode (4a, 6a) to a measuring device (34, 38).

2. Device according to claim 1, characterized in that the biaxially stretched polymer is polyvinylidene fluoride.

3. Device according to either of the claims 1 and 2, characterized in that the electrodes (4, 6) are made from copper or aluminium.

4. Device according to any one of the claims 1 to 3, characterized in that it also has an insulating layer (8) deposited on each of the faces of the film (2).

5. Device according to claim 4, characterized in that the insulating layer (8) is made from unpolarized polyvinylidene fluoride.

6. Device according to any one of the claims 1 to 5, characterized in that the means for positioning the detonator (12) with respect to the explosive charge (10) and for applying it to said charge are

constituted by a box (28) surrounding the detonator and closed by a cover (30), a spring (32) being positioned between cover (30) and detonator (12) and a pellet (33) being inserted between detonator (12) and spring (32).

FIG. 3

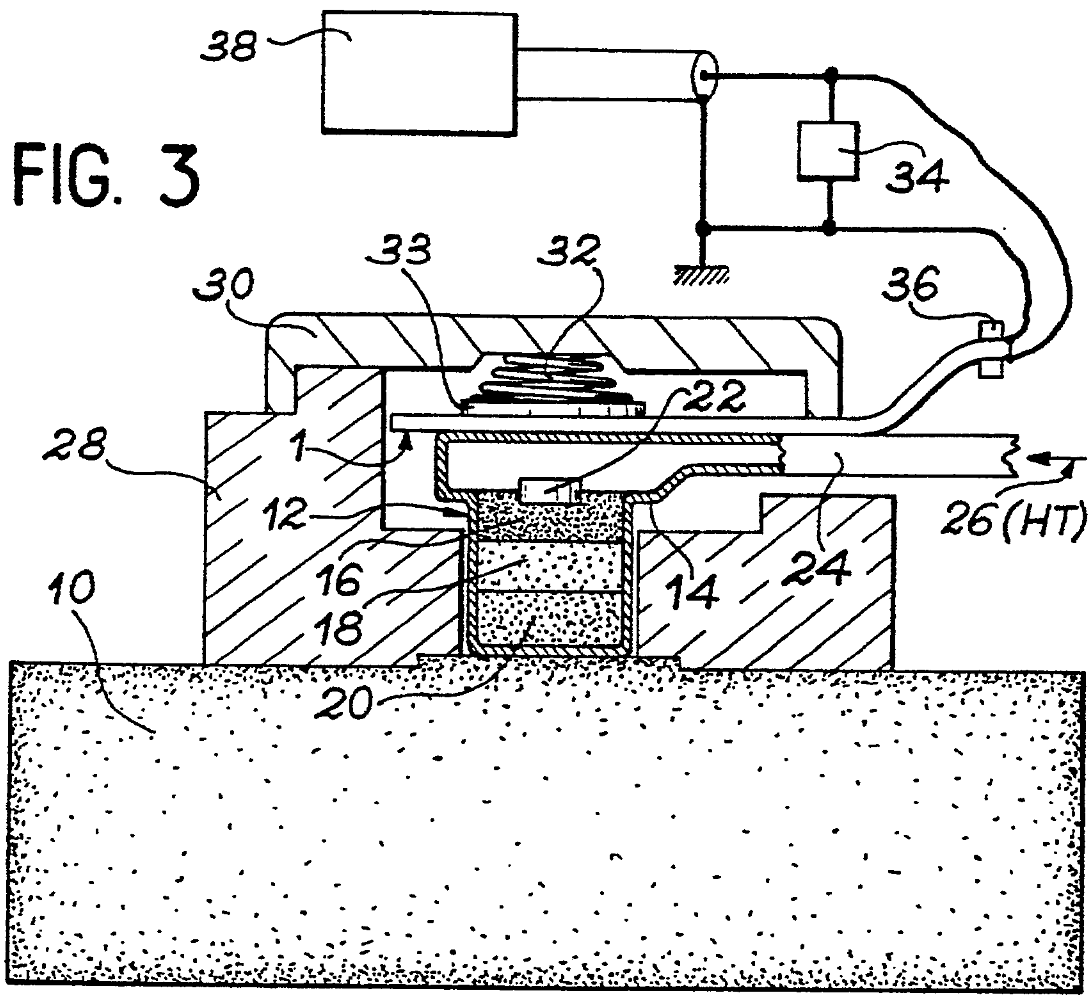


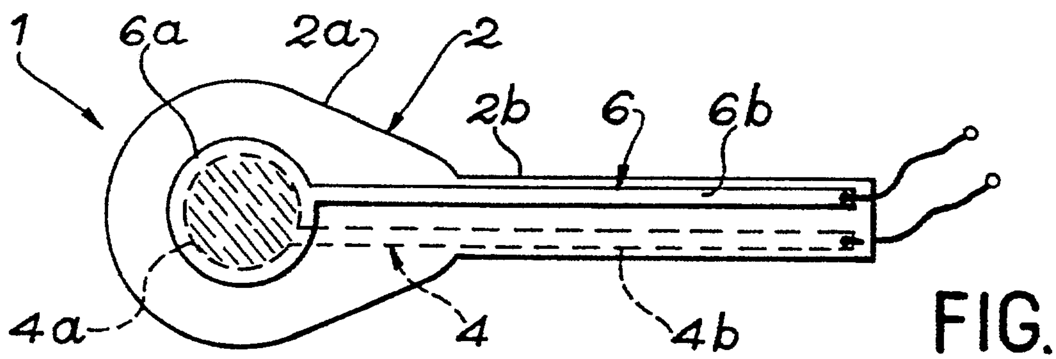


FIG. 1

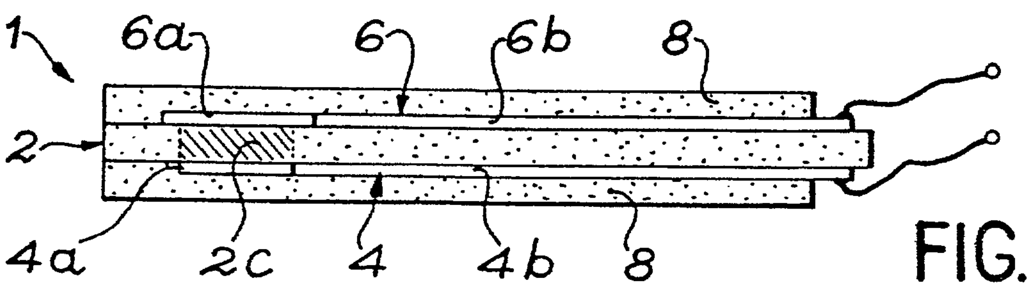


FIG. 2

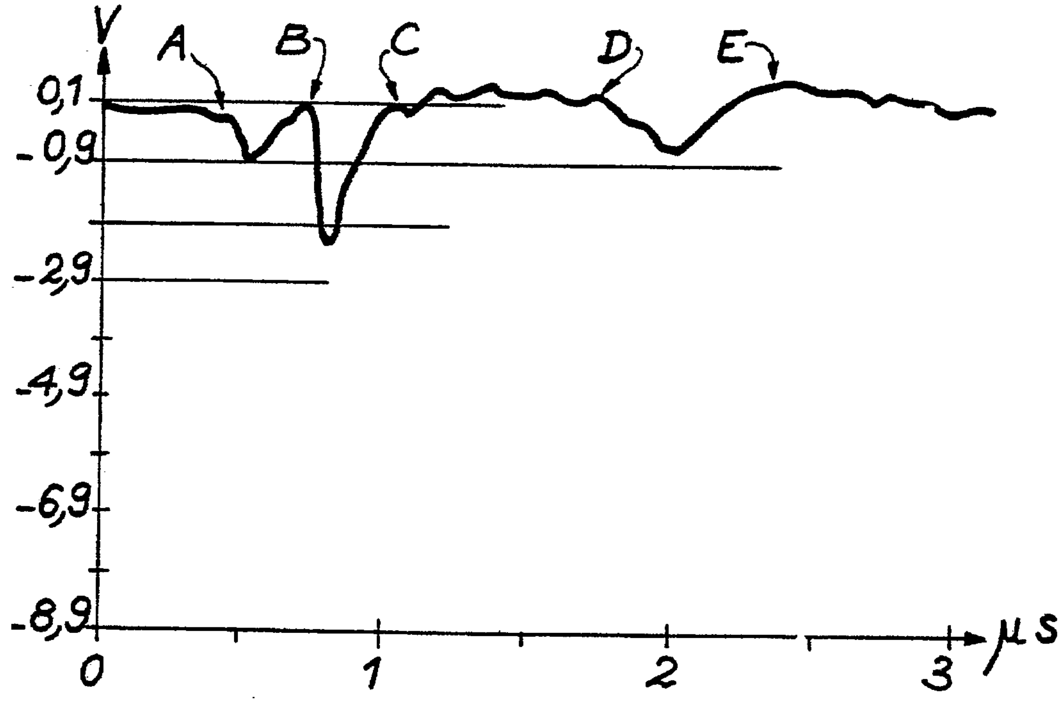


FIG. 4

FIG. 5

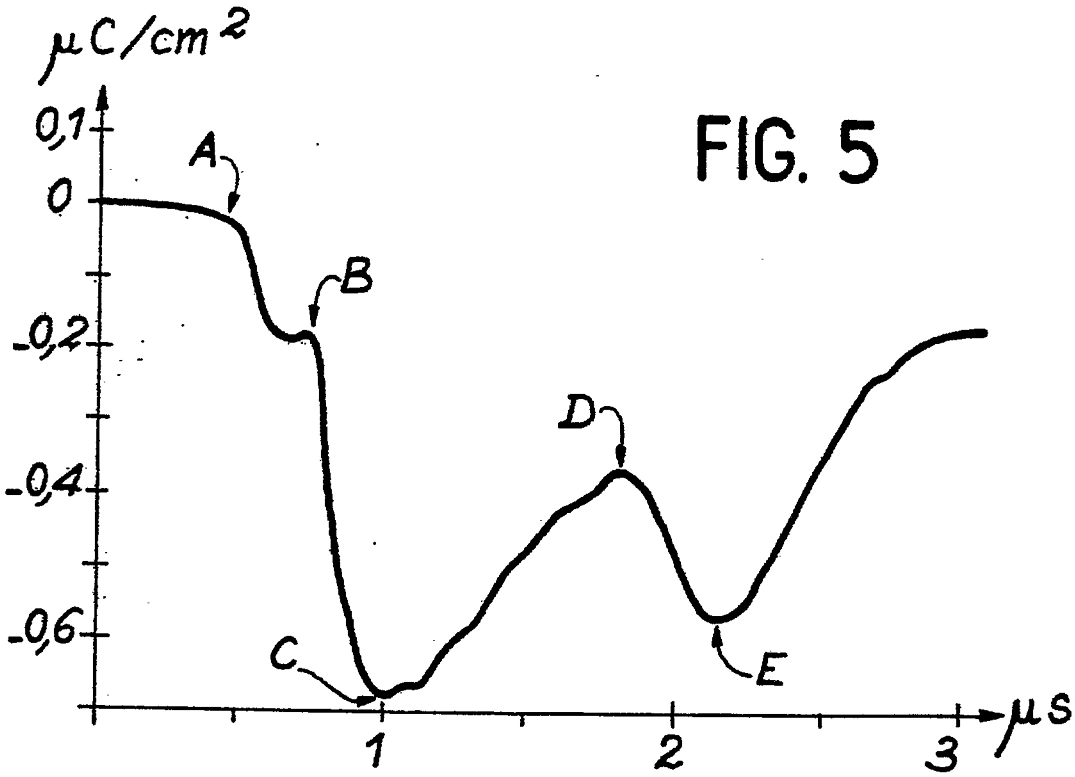

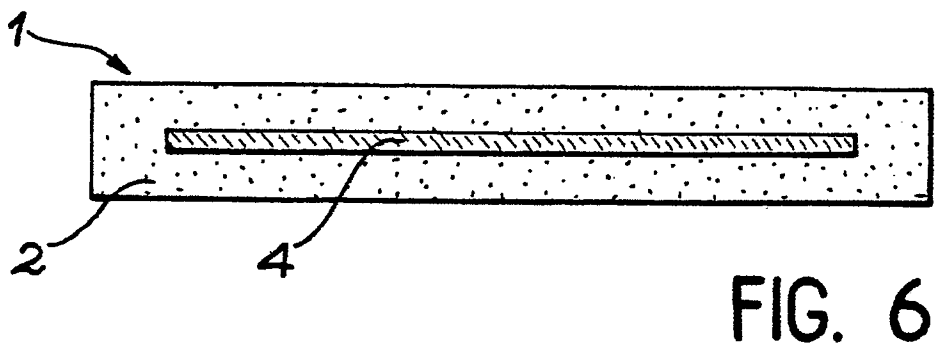


FIG. 6

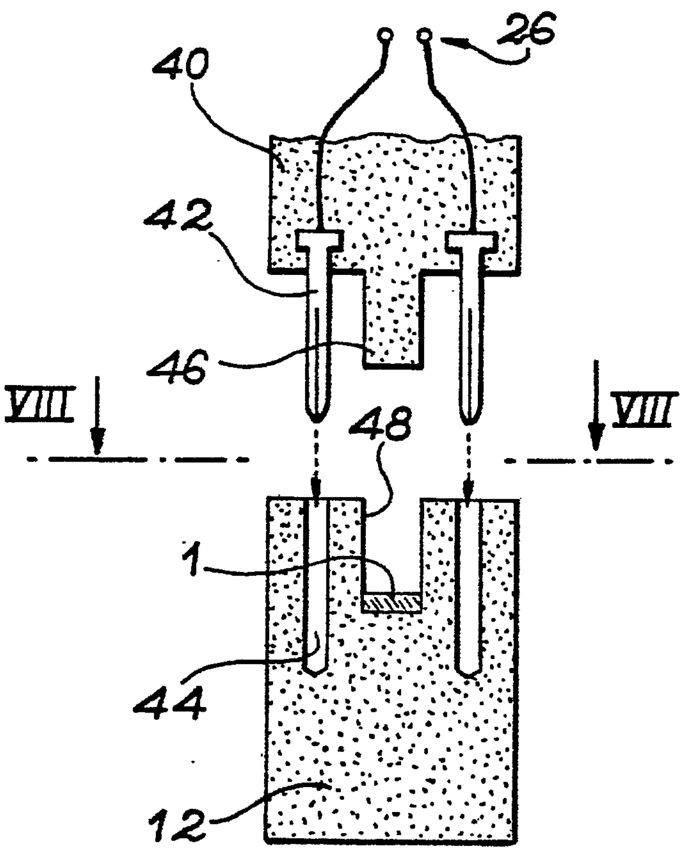


FIG. 7

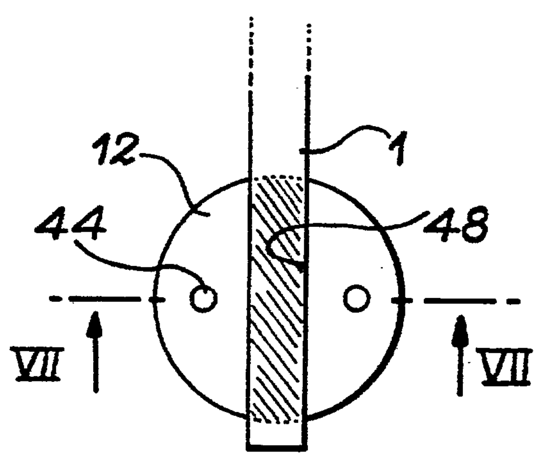


FIG. 8